# EUROPÄISCHE PATENTANMELDUNG

(11) **EP 0 540 467 A1**
(43) Veröffentlichungstag der Anmeldung: **05.05.1993**
(21) Anmeldenummer: 92810806.7
(22) Anmeldetag: 20.10.1992
(51) Int. Cl.: C08L 63/00, C08K 3/36, H01B 3/40

(54) **Stabilisierte Epoxidharz-Zusammensetzungen**

(30) Priorität: 29.10.1991 CH 3158/91
(71) Anmelder: CIBA-GEIGY AG, CH-4002 Basel (CH)
(72) Erfinder: Hollstein, Werner, Dr., W-7800 Freiburg (DE); Rüger, Peter, CH-4104 Oberwil (CH); Rabener, Claus W., Dr., W-7858 Oetlingen (DE)

(57) **Zusammenfassung**

Zusammensetzungen enthaltend
(a) ein flüssiges Epoxidharz,
(b) einen Füllstoff, enthaltend mindestens 50 Gew.-% Quarzmehl,
(c) ein Polyetherpolyol und
(d) ein organisch modifiziertes Schichtsilikat,

eignen sich für Anwendungen in der Vakuum-Giesstechnologie, insbesondere als Umhüllungsmaterial für elektrische und elektronische Bauteile.

## Beschreibung

Die vorliegende Erfindung betrifft stabilisierte Epoxidharz-Zusammensetzungen, die als Vergussmassen, insbesondere als Umhüllungssysteme für Hochspannungsbauteile, verwendet werden können.

Bei der Verwendung von Quarzmehl-gefüllten Epoxidharzen als Vergussmassen, z.B. für Hochspannungsbauteile wie Fly Back Transformatoren für Fernsehgeräte oder Automobilzündspulen, ist die Verarbeitung unter Vakuum die übliche Methode, um die Qualität der fertigen Komponenten sicherzustellen. Dabei wird die Harzmasse in einem Dünnschichtentgasungsmischer (DEM) aufbereitet, um einen blasenfreien Verguss zu ermöglichen. Die thermische und mechanische Belastung, der das Harz während der Aufbereitung im DEM ausgesetzt ist, können dazu führen, dass die Epoxidgruppen miteinander reagieren, was in einem starken Viskositätsanstieg resultiert. Dieser unerwünschte Effekt kann für den Verarbeiter grosse Probleme, wie beispielsweise veränderte Reaktivität und Fliessfähigkeit und damit auch verminderte Qualität der Fertigteile, zur Folge haben. Ausserdem wird die Reinigung der Anlage erschwert und ein kontinuierliches Arbeiten unmöglich gemacht.

Die EP-A 348 193 beschreibt eine Epoxidharz-Zusammensetzung aus einem flüssigen Epoxidharz, einem anorganischen Füllstoff, einem Polyetherpolyol und einem Härtungsmittel bestehend aus einem Säureanhydrid und einem Imidazol, die sich durch hohe Korrosionsstabilität auszeichnet und als Giessharz zur Umhüllung von Zündspulen geeignet ist.

Es wurde nun gefunden, dass eine derartige Harzmischung sich durch den Zusatz eines organisch modifizierten Schichtsilikats auf Basis von Smektit stabilisieren lässt, so dass ein Viskositätsanstieg während der Aufbereitung im Dünnschichtentgasungsmischer verhindert wird. Dieser Effekt ist überraschend, da besagte Schichtsilikate üblicherweise als Thixotropiemittel verwendet werden, was bei dem im Dünnschichtentgasungsmischer vorliegenden niedrigen Schergefälle einen Viskositätsanstieg erwarten lässt.

Gegenstand der vorliegenden Erfindung ist eine Zusammensetzung enthaltend
(a) ein flüssiges Epoxidharz,
(b) einen Füllstoff, enthaltend mindestens 50 Gew.-% Quarzmehl,
(c) ein Polyetherpolyol und
(d) ein organisch modifiziertes Schichtsilikat.

Als Epoxidharz (a) der erfindungsgemässen Zusammensetzung kann im Prinzip jede der in der Technik der Epoxidharze übliche Verbindung eingesetzt werden, sofern sie bis zu Temperaturen von etwa 50 °C flüssig ist.

### Beispiele für Epoxidharze sind:

I) Polyglycidyl- und Poly(β-methylglycidyl)ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly(ß-methylglycidyl)ether erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit oder Sorbit sowie von Polyepichlorhydrinen.

Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan, oder sie besitzen aromatische Kerne, wie N,N-Bis(2-hydroxyethyl)anilin oder p,p′-Bis(2-hydroxyethylamino)diphenylmethan.

Die Epoxidverbindungen können sich auch von einkerningen Phenolen ableiten, wie beispielsweise von Resorcin oder Hydrochinon; oder sie basieren auf mehrkernigen Phenolen, wie beispielsweise Bis(4-hydroxyphenyl)methan, 4,4′-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan oder 2,2-Bis(3,5-dibrom-4-hydroxyphenyl)propan, sowie von Novolaken erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol oder 4-tert-Butylphenol, oder durch Kondensation mit Bisphenolen, so wie oben beschrieben.

III) Poly(N-glycidyl)verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis(4-methylaminophenyl)methan.

Zu den Poly(N-glycidyl)verbindungen zählen aber auch Triglycidylisocyanurat, N,N -Di-glycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl)verbindungen, beispielsweise Di-S-glycidylderivate, die sich von Dithiolen, wie beispielsweise Ethan- 1,2-dithiol oder Bis(4-mercaptomethylphenyl)ether, ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3′,4′-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N′-(2-glycidyloxypropyl)-5,5-dimethylhydantoin oder 2-Glycidyloxy-1,3-bis(5,5-dimethyl-1-glycidylhydantoin-3-yl)propan.

Bevorzugt verwendet werden Epoxidharze mit einem Epoxidgehalt von 1 bis 10 Aequivalenten/kg, welche Glycidylether, Glycidylester oder N-Glycidylderivate von aromatischen, heterocyclischen, cycloaliphatischen oder aliphatischen Verbindungen sind.

Falls zweckmässig, können natürlich auch Gemische von zwei oder mehreren Epoxidharzen verwendet werden.

Vorzugsweise werden in den erfindungsgemässen Zusammensetzungen als Komponente (a) Diglycidylether von Bisphenolen, cycloaliphatische Epoxide oder Gemische von Diglycidylethern von Bisphenolen und cycloaliphatischen Epoxiden eingesetzt.

Bevorzugte Komponenten (a) sind Gemische aus einem Bisphenol A-diglycidylether und einem cycloaliphatischen Epoxid.

Besonders bevorzugt sind Gemische aus einem Bisphenol A-diglycidylether und 3,4-Epoxycyclohexancarbonsäure-3,4-epoxycyclohexylmethylester.

Das Epoxidharz (a) wird im allgemeinen in Mengen von 10-65 Gew.-%, insbesondere 20-50 Gew.-%, bezogen auf die Gesamtzusammensetzung, eingesetzt.

Wird als Epoxidharz (a) ein Gemisch aus einem Diglycidylether eines Bisphenols und einem cycloaliphatischen Epoxid eingesetzt, so enthält dieses Gemisch im allgemeinen 50-90 Gew.-%, insbesondere 55-70 Gew.-%, Diglycidylether eines Bisphenols und 10-50 Gew.-%, insbesondere 30-45 Gew.-%, eines cycloaliphatischen Epoxids.

Geeignete Füllstoffe, die als Komponente (b) in den erfindungsgemässen Zusammensetzungen verwendet werden können, sind, neben dem bereits erwähnten Quarzmehl, beispielsweise Aluminiumhydroxid, Aluminiumoxid, Titandioxid, Calciumcarbonat, Talkum, Ton, Calciumsilikat, Mica, Glassfasern, Glaspulver, Kreide oder Dolomit.

Vorzugsweise wird als Füllstoff (b) ein Gemisch aus 50-100 Gew.-% Quarzmehl und 0-50 Gew.-% Kreide oder Dolomit eingesetzt.

Besonders bevorzugt wird reines Quarzmehl als Füllstoff (b) verwendet.

Der Füllstoff (b) ist in den erfindungsgemässen Zusammensetzungen vorzugsweise in einer Menge von 35-90 Gew.-%, insbesondere 50-75 Gew.-%, bezogen auf die Gesamtzusammensetzung, enthalten.

Als Komponente (c) der erfindungsgemässen Zusammensetzungen kann im Prinzip jedes Polyoxyalkylenpolyol eingesetzt werden.

Bevorzugte Polyetherpolyole sind Polyethylenglykol, 2-Ethylglycerin-polyethylenglykol, 2-Ethylglycerin-polypropylenglykol und insbesondere Glycerin-polypropylenglykol.

Die Menge des Polyetherpolyols (c) in den erfindungsgemässen Zusammensetzungen beträgt im allgemeinen bis zu 10 Gew.-%, vorzugsweise 1-5 Gew.-%, bezogen auf die Gesamtzusammensetzung.

Als Komponente (d) können prinzipiell alle dem Fachmann als rheologische Additive bekannten organisch modifizierten Schichtsilikate eingesetzt werden, so zum Beispiel Mineralien, welche Natrium-, Calcium-, Magnesium-, Eisen-, Lithium- oder Aluminiumsilikate enthalten. Vorzugsweise werden organisch modifizierte Schichtsilikate auf Basis des Tonminerals Bentonit eingesetzt, wie sie beispielsweise in J. Am. Oil Chem. Soc. 61, 382-387 (1984) beschrieben werden.

Geeignet sind insbesondere die unter der Bezeichnung BENTONE® (NL Chemicals) vertriebenen modifizierten Bentonite.

Besonders bevorzugt ist BENTONE® SD-2 (NL Chemicals).

Die Komponente (d) wird in den erfindungsgemässen Zusammensetzungen zweckmässig in Mengen von 0,05-2 Gew.-%, vorzugsweise 0,1-1 Gew.-%, eingesetzt, bezogen auf die Gesamtzusammensetzung.

Als weitere übliche Zusätze können die erfindungsgemässen Gemische ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Antioxidantien und Lichtschutzmittel enthalten

Die erfindungsgemässen Gemische eignen sich zur Herstellung von gehärteten Produkten, z.B. zur Umhüllung von elektrischen oder elektronischen Bauteilen. Einen weiteren Erfindungsgegenstand bilden daher Zusammensetzungen enthaltend die oben beschreibenen Komponenten (a)-(d) und zusätzlich (e) einen Härter für das Epoxidharz (a).

Als Härter (e) sind an sich beliebige Epoxidharzhärter geeignet, wie z.B. Cyanamid, Dicyandiamid, Polycarbonsäuren, Polycarbonsäureanhydride, Polyamine, Polyaminoamide, Addukte aus Aminen und Polyepoxiden und Polyole.

Bevorzugte Härter sind Polycarbonsäweanhydride, wie beispielsweise Phthalsäureanhydrid, Nadicanhydrid, Methylnadicanhydrid, Methyltetrahydrophthalsäureanhydrid, Methylhexahydrophthalsäureanhydrid und insbesondere Tetrahydrophthalsäureanhydrid und Hexahydrophthalsäureanhydrid.

Als zusätzliche Komponente können die erfindungsgemässen Zusammensetzungen ausserdem einen Härtungsbeschleuniger (f) enthalten. Geeignete Beschleuniger sind dem Fachmann bekannt. Als Beispiele seien genannt: Komplexe von Aminen, besonders tertiären Aminen, mit Bortrifluorid oder Bortrichlorid; tertiäre Amine, wie Benzyldimethylamin; Harnstoffderivate, wie N-4-Chlorphenyl-N′N′-dimethylharnstoff (Monuron); gegebenenfalls substituierte Imidazole, wie Imidazol oder 2-Phenylimidazol.

Bevorzugte Beschleuniger (f) sind Imidazole, insbesondere 2-Phenylimidazol und 2-Ethyl-4-methylimidazol.

Die Komponenten (e) und (f) werden in den üblichen wirksamen, d.h. für die Härtung der erfindungsgemässen Zusammensetzungen ausreichenden, Mengen eingesetzt. Das Verhältnis der Komponenten (a) und (e) und gegebenenfalls (f) hängt von der Art der verwendeten Verbindungen, der erforderlichen Härtungsgeschwindigkeit und den im Endprodukt gewünschten Eigenschaften ab und kann vom Fachmann leicht ermittelt werden. Wenn der Härter (e) ein Polycarbonsäureanhydrid ist, verwendet man gewöhnlich 0,4 bis 1,1 Äquivalente Anhydridgruppen pro Epoxidäquivalent.

Das Harzgemisch (a)-(d) und die Härterkomponente (e) (gegebenenfalls zusammen mit dem Beschleuniger (f)) werden im allgemeinen getrennt gelagert und erst kurz vor der Applikation gemischt.

Die Härtung der erfindungsgemässen Gemische kann auf an sich bekannte Weise ein- oder zweistufig vorgenommen werden. Sie erfolgt im allgemeinen durch Erhitzen auf Temperaturen zwischen 80 °C und 200 °C, insbesondere zwischen 100 °C und 180 °C.

Die Herstellung der erfindungsgemässen Stoffgemische kann in üblicher Weise durch Vermischen der Komponenten mit Hilfe bekannter Mischaggregate (Rührer, Walzen) erfolgen.

Aufgrund der hohen Stabilität gegenüber thermischen und mechanischen Belastungen eignen sich die erfindungsgemässen Zusammensetzungen besonders für Anwendungen in der Vakuum-Giesstechnologie, insbesondere als Umhüllungsmaterial für elektrische und elektronische Bauteile. Die gehärteten Vergussmassen zeichnen sich durch gute mechanische und dielektrische Eigenschaften und durch eine hohe Lebensdauer aus.

Gegenstand der vorliegenden Erfindung ist somit auch die Verwendung der erfindungsgemässen Zusammensetzungen als Umhüllungsmaterial für elektrische und elektronische Bauteile.

Die Erfindung wird durch das nachfolgende Beispiel näher erläutert.

### Beispiel 1:

Zur Untersuchung des Viskositätsverhaltens werden die erfindungsgemässe Harzmischung I und die Vergleichsmischung II (gleiche Zusammensetzung, jedoch ohne Komponente (d)) über einen Zeitraum von 5 Tagen im Dünnschichtentgasungsmischer bei einer Temperatur von 80 °C und einem Druck von 200 Pa entgast, wobei in Abständen von jeweils einem Tag die Viskosität und der Epoxidgehalt der Harzmischung bestimmt werden. Die Resultate sind in Tabelle 1 dargestellt.
Harzmischung I:
   (a) Epoxidharzgemisch aus 20 Gew.-Teilen Bisphenol A-diglycidylether mit einem Epoxidgehalt von 5,2-5,4 val/kg und 12 Gew.-Teilen 3,4-Epoxycyclohexancarbonsäure-3,4-epoxycyclohexylmethylester mit einem Epoxidgehalt von 7,0-7,5 val/kg;
   (b) 65 Gew. -Teile Quarzmehl;
   (c) 3 Gew.-Teile Glycerinpolypropylenglykol;
   (d) 0,2 Gew.-Teile BENTONE® SD-2 (NL Chemicals).
Harzmischung II:
   (a) Epoxidharzgemisch aus 20 Gew.-Teilen Bisphenol A-diglycidylether mit einem Epoxidgehalt von 5,2-5,4 val/kg und 12 Gew.-Teilen 3,4-Epoxycyclohexancarbonsäure-3,4-epoxycyclohexylmethylester mit einem Epoxidgehalt von 7,0-7,5 val/kg;
   (b) 65 Gew.-Teile Quarzmehl;
   (c) 3 Gew.-Teile Glycerinpolypropylenglykol.

**Tabelle 1:**

| Tage | Harzmischung I | | Harzmischung II | |
|---|---|---|---|---|
| | Epoxidgehalt [val/kg] | Viskosität [Pa·s] | Epoxidgehalt [val/kg] | Viskosität [Pa·s] |
| 1 | 1,88 | 230 | 1,88 | 290 |
| 2 | 1,88 | 230 | 1,81 | 450 |
| 3 | 1,88 | 240 | 1,75 | 950 |
| 4 | 1,88 | 240 | 1,66 | >1000 |
| 5 | 1,88 | 240 | 1,49 | >1000 |

## Patentansprüche

1. Zusammensetzung enthaltend
(a) ein flüssiges Epoxidharz,
(b) einen Füllstoff, enthaltend mindestens 50 Gew.-% Quarzmehl,
(c) ein Polyetherpolyol und
(d) ein organisch modifiziertes Schichtsilikat.

2. Zusammensetzung gemäss Anspruch 1, enthaltend als Komponente (a) einen Diglycidylether eines Bisphenols, ein cycloaliphatisches Epoxid oder ein Gemisch aus einem Diglycidylether eines Bisphenols und einem cycloaliphatischen Epoxid.

3. Zusammensetzung gemäss Anspruch 1, enthaltend als Komponente (a) ein Gemisch aus einem Bisphenol A-diglycidylether und einem cycloaliphatischen Epoxid.

4. Zusammensetzung gemäss Anspruch 1, enthaltend als Komponente (a) ein Gemisch aus einem Bisphenol A-diglycidylether und 3,4-Epoxycyclohexancarbonsäure-3,4-epoxycyclohexylmethylester.

5. Zusammensetzung gemäss Anspruch 1, enthaltend als Komponente (b) ein Gemisch aus 50-100 Gew.-% Quarzmehl und 0-50 Gew.-% Dolomit oder Kreide.

6. Zusammensetzung gemäss Anspruch 1, enthaltend als Komponente (b) reines Quarzmehl.

7. Zusammensetzung gemäss Anspruch 1, enthaltend als Komponente (c) Glycerin-polypropylenglykol, Polyethylenglykol, 2-Ethylglycerin-polyethylenglykol oder 2-Ethylglycerin-polypropylenglykol.

8. Zusammensetzung gemäss Anspruch 1, enthaltend als Komponente (c) Glycerin-polypropylenglykol.

9. Zusammensetzung gemäss Anspruch 1, enthaltend als Komponente (d) ein organisch modifiziertes Schichtsilikat auf der Basis von Bentonit.

10. Zusammensetzung gemäss Anspruch 1, enthaltend zusätzlich
(e) einen Härter für das Epoxidharz (a).

11. Verwendung der Zusammensetzung gemäss Anspruch 1 als Umhüllungsmaterial für elektrische oder elektronische Bauteile.
